# EUROPÄISCHE PATENTSCHRIFT

(11) **EP 3 132 104 B1**
(45) Veröffentlichungstag und Bekanntmachung des Hinweises auf die Patenterteilung: **14.11.2018**
(21) Anmeldenummer: 15728387.0
(22) Anmeldetag: 16.04.2015
(51) Int. Cl.: E05B 81/34, E05B 81/36, E05B 81/16, E05B 81/24, F16H 19/00

(54) **ANTRIEBSEINHEIT ZUM SICHERN EINES DREHACHSENABSTANDES VON GETRIEBEGLIEDERN**
DRIVE UNIT FOR SECURING AN AXIS-OF-ROTATION DISTANCE OF TRANSMISSION ELEMENTS
UNITÉ D'ENTRAÎNEMENT DESTINÉE À BLOQUER UN ÉCART ENTRE LES AXES DE ROTATION D'ÉLÉMENTS DE TRANSMISSION

(30) Priorität: 17.04.2014 DE 102014005656
(43) Veröffentlichungstag der Anmeldung: 22.02.2017
(73) Patentinhaber: Kiekert AG, 42579 Heiligenhaus (DE)
(72) Erfinder: HANDKE, Armin, 47269 Duisburg (DE)
(86) Internationale Anmeldenummer: PCT/DE2015/000187
(87) Internationale Veröffentlichungsnummer: WO 2015/158323

(56) Entgegenhaltungen:
- EP-A2- 1 603 213
- WO-A1-2013/047112
- DE-A1- 4 439 479
- US-A1- 2004 201 245
- US-A1- 2004 245 785
- US-A1- 2014 165 678

## Beschreibung

Die Erfindung betrifft eine Antriebseinheit für kraftfahrzeug-technische Anwendungen, insbesondere eine Zentralverriegelungsantriebseinheit für einen Kraftfahrzeug-Türverschluss, mit einem Motor, einer Getriebeeinheit, welche zumindest ein erstes Getriebeglied und ein zweites Getriebeglied mit jeweils einem ersten Zahnsegment und einem zweiten Zahnsegment und einer ersten Drehachse und einer zweiten Drehachse und einen ersten Anschlag aufweist, wobei die Antriebseinheit zumindest eine erste Anschlagposition aufweist.

Eine derartige Antriebseinheit ist aus der DE 199 06 997 C2 bekannt. Solche Antriebseinheiten sind üblicherweise mit einem Elektromotor angetrieben. Ein Antrieb mit einem Elektromotor ermöglicht es mittels Erfassen der Stromaufnahme des Elektromotors, festzustellen, wann die Antriebseinheit die erste Anschlagposition erreicht hat und den Elektromotor danach zu stoppen. Eine Änderung der Stromaufnahme erfolgt jedoch mit einer gewissen Verzögerung, sodass der Elektromotor nicht unmittelbar bei Erreichen der Anschlagposition, sondern erst einige Millisekunden danach gestoppt werden kann. Während dieser Zeit wirken auf die Antriebseinheit, insbesondere auf die Getriebeglieder, sehr hohe Kräfte, welche die Zahnsegmente überspringen lassen können. Dabei werden die Getriebeglieder verschlissen und die Antriebseinheit kann Geräuschemissionen bis in den Innenraum des Kraftfahrzeugs erzeugen. Aus der EP 1 603 213 A2 ist eine Antriebseinheit für kraftfahrzeug-technische Anwendungen mit einem Motor und einer Getriebeeinheit mit einem ersten und einem zweiten Getriebeglied bekannt, wobei ein Blockierelement vorgesehen ist, um das ersten und das zweite Getriebglied miteinander in blockierenden Eingriff zu bringen.

Aufgabe der vorliegenden Erfindung ist es daher, eine Antriebseinheit für kraftfahrzeug-technische Anwendungen zu schaffen, bei welcher ein Überspringen der miteinander im Eingriff befindlichen Getriebeglieder, insbesondere der Zahnsegmente, vermindert wird, der Verschleiß und die Geräuschemissionen der Getriebeglieder der Antriebseinheit vermindert werden.

Diese Aufgabe wird erfindungsgemäß durch eine Antriebseinheit mit den Merkmalen des Patenanspruchs 1 gelöst. Vorteilhafte Ausgestaltungen mit zweckmäßigen Weiterbildungen der Erfindung ergeben sich aus den übrigen Patentansprüchen, der Beschreibung und den Figuren.

Um eine Antriebseinheit der eingangs genannten Art zu schaffen, bei welcher ein Überspringen verhindert, der Verschleiß und die Geräuschemissionen der Getriebeglieder der Antriebseinheit vermindert werden, ist es erfindungsgemäß vorgesehen, dass zumindest das erste Getriebeglied ein Verriegelungselement hat, welches in der ersten Anschlagposition mittels eines Aufnahmeelementes verriegelt ist und in der ersten Anschlagposition einen Abstand der ersten Drehachse des ersten Getriebegliedes zum zweiten Getriebeglied sichert.

Die Erfindung betrifft insbesondere eine Zentralverriegelungsantriebseinheit für einen Kraftfahrzeug-Türverschluss, wobei die Antriebseinheit einen Mechanismus zum Verriegeln und Entriegeln des Türverschlusses antreibt. Aus sicherheitstechnischen Gesichtspunkten muss die Antriebseinheit über die gesamte Lebensdauer ein einwandfreies Funktionieren des Mechanismus zum Verriegeln und Entriegeln des Türverschlusses gewährleisten. Dies muss insbesondere dann gewährleistet sein, wenn sich aufgrund von Alterung, Verschmutzung und Abnutzung die Eingriffsverhältnisse der Getriebeglieder auch nur geringfügig ändern.

Die Antriebseinheit weist zumindest eine erste Anschlagposition auf. Bevorzugt verharrt die Antriebseinheit in der ersten Anschlagposition, wenn zum Beispiel eine verriegelte Schließstellung des Türschlosses vorliegt. In einer anderen Ausführungsform verharrt die Antriebseinheit in der ersten Anschlagposition, wenn eine entriegelte Schließstellung vorliegt. Insbesondere ist in der ersten Anschlagposition eine Bewegung der Getriebeeinheit in zumindest einer Richtung blockiert.

Erfindungsgemäß sichert das Verriegelungselement des ersten Getriebegliedes in der ersten Anschlagposition den Abstand der ersten Drehachse des ersten Getriebegliedes zum zweiten Getriebeglied, bevorzugt den Abstand der ersten Drehachse des ersten Getriebegliedes zur zweiten Drehachse des zweiten Getriebegliedes. Vorzugsweise sichert das Verriegelungselement den Abstand der Drehachsen in einer Richtung, welche entgegengesetzt zu der Richtung verläuft, welche durch ein Abstoßen der beiden Getriebeglieder vorgegeben ist, wenn sich die beiden Getriebeglieder mit ihren jeweiligen Zahnsegmenten miteinander im Eingriff befinden.

Je nach Anordnung des ersten Getriebegliedes zum zweiten Getriebeglied sichert das Verriegelungselement in der ersten Anschlagposition den Abstand derart, dass ein Vergrößern des Abstandes der Drehachsen oder ein Verkleinern des Abstandes der Drehachsen zueinander verhindert wird. Zum Beispiel kann das Verriegelungselement bei einer Anordnung, bei welcher die Drehachsen an jeweils gegenüberliegenden Seiten von einer Berührungslinie der miteinander in Eingriff befindenden Zahnsegmente angeordnet sind, den Abstand derart sichern, dass ein Vergrößern des Abstandes der Drehachsen nicht möglich ist.

Bei einer anderen Anordnung, bei welcher die Drehachsen jeweils auf einer Seite von einer Berührungslinie der miteinander in Eingriff befindenden Zahnsegmente aus betrachtet angeordnet sind, kann das Verriegelungselement den Abstand derart sichern, dass ein Verkleinern des Abstandes der Drehachsen nicht möglich ist.

Das Verriegelungselement ist in der ersten Anschlagposition mittels des Aufnahmeelementes verriegelt. Als verriegelt wird hier ein festes Anliegen des Verriegelungselementes an einer Stützfläche des zweiten Getriebegliedes bezeichnet. Es definiert somit die stützende Verbindung zwischen den Getriebegliedern, so dass ein Achsabstand der Drehachsen der Getriebeglieder fixiert wird. Dieses Verriegeln unterscheidet sich von dem Zustand des Türschlosses, der auch eine verriegelte und entriegelte Stellung einnehmen kann, wobei diese Stellungen aber eine Funktion des Schlosses beschreiben. Das Verriegelungselement kann zum Beispiel als Pin ausgeführt sein, welcher im verriegelten Zustand in dem Aufnahmeelement aufgenommen ist.

Insbesondere kann das Aufnahmeelement eine Stützfläche aufweisen, an welcher das Verriegelungselement im verriegelten Zustand anliegt und mit der Stützfläche zumindest einen Berührpunkt, bevorzugt eine Berührungslinie ausbildet. Mittels der Stützfläche kann das Verriegelungselement derart gestützt werden, dass auf das erste Getriebeglied über einen Kraftfluss von der Stützfläche aus über das Verriegelungselement hin zum ersten Getriebeglied eine Kraft in eine Richtung einer Flächennormalen der Stützfläche wirkt. Die Stützfläche und das Verriegelungselement können derart angeordnet sein, dass im verriegelten Zustand eine Flächennormale der Stützfläche die erste Drehachse des ersten Getriebegliedes und den Berührpunkt bzw. die Berührungslinie schneidet. Bevorzugt schließt eine Gerade, welche den Berührpunkt bzw. die Berührungslinie und die erste Drehachse schneidet, mit der Flächennormalen der Stützfläche einen Winkel ein, welcher kleiner als 45 Grad ist.

Das Aufnahmeelement weist in einer Ausgestaltung einen Spalt auf, wobei bei einer Drehbewegung des ersten Getriebegliedes in Richtung der ersten Anschlagposition das Verriegelungselement in den Spalt hineingeschoben wird. Bei Erreichen der Anschlagposition stößt das Verriegelungselement bevorzugt an ein Ende des Spaltes. Insbesondere kann sich der Spalt zum Ende hin verengen. In einer weiteren Ausgestaltung kann das Aufnahmeelement eine Hinterschneidung oder eine Kulisse zum Führen des Verriegelungselementes aufweisen.

Das Aufnahmeelement kann an einem Bauteil der Antriebseinheit angeordnet sein, welches unbeweglich ist. In vorteilhafterweise ist das Bauteil mit zumindest einem Lagerungselement des zweiten Getriebegliedes starr verbunden, sodass kein Spiel zwischen dem Bauteil und dem Lagerungselement vorhanden ist. Befindet sich die Antriebseinheit in der ersten Anschlagposition, ist das Verriegelungselement mittels des Aufnahmeelementes an dem Bauteil in zumindest einer Richtung verriegelt und in radialer Richtung des ersten Getriebegliedes blockiert.

Erfindungsgemäß ist vorgesehen, dass das Aufnahmeelement an dem zweiten Getriebeglied angeordnet ist und das Verriegelungselement in der ersten Anschlagposition mittels dem Aufnahmeelement in radialer Richtung des ersten Getriebegliedes blockiert ist. Insbesondere ist vorgesehen, dass das Verriegelungselement des ersten Getriebegliedes derart korrespondierend mit dem Aufnahmeelement des zweiten Getriebegliedes in Eingriff kommt, dass die Getriebeglieder in der ersten Anschlagposition radial gegeneinander fixiert sind.

Eine vorteilhafte Weiterbildung sieht vor, dass das erste Getriebeglied ein Zahnrad ist. In dieser Ausführungsform erstreckt sich das erste Zahnsegment des ersten Getriebegliedes insbesondere entlang eines vollen Kreisumfanges. Bevorzugt ist an dem ersten Getriebeglied eine Halterung für das Verriegelungselement vorgesehen, wobei die Halterung zum Beispiel als eine Scheibe ausgebildet sein kann. Die Halterung und das erste Getriebeglied sind vorzugsweise als ein Bauteil ausgeführt. In vorteilhafterweise ist das Verriegelungselement als zylindrischer Stift, Bolzen oder Pin ausgebildet, welcher sich von der Halterung aus parallel zur ersten Drehachse des ersten Getriebegliedes erstreckt. Der Pin ist bevorzugt einstückig mit dem ersten Getriebeglied ausgebildet.

In einer weiteren vorteilhaften Weiterbildung ist vorgesehen, dass das erste Getriebeglied durch eine Schnecke angetrieben ist und das zweite Getriebeglied ein Zahnrad ist, wobei das zweite Getriebeglied mit einem Hebel zusammenwirkt. Dabei ist die Schnecke durch einen Motor, insbesondere einen Elektromotor, vorzugsweise über ein 24-Volt Bordnetz eines Kraftfahrzeugs, angetrieben. Ein derartiger Schneckenantrieb bewirkt eine starke Untersetzung, so dass die Antriebseinheit eine hohe Kraft, insbesondere zum Öffnen des Türverschlusses, bereitstellen kann. Bevorzugt ist die Verbindung zwischen dem ersten Zahnsegment und dem zweiten Zahnsegment ebenfalls als Untersetzung ausgebildet. Das zweite Getriebeglied kann mit einem Hebel zusammenwirken, welcher bevorzugt beim Bewegen aus der ersten Anschlagposition heraus den Zustand der Einstellung des Türschlosses ändert. Dabei kann das zweite Getriebeglied über eine weitere Zahnverbindung den Hebel antreiben. Der Hebel kann mittelbar oder unmittelbar auf eine Verriegelungseinheit einwirken.

In einer weiteren Ausführungsform ist das zweite Getriebeglied als Hebel und das zweite Zahnsegment des zweiten Getriebegliedes an einem äußeren Radius des zweiten Getriebegliedes ausgebildet. Bei der Anordnung des zweiten Zahnsegmentes an dem äußeren Radius weisen bei einer Bewegung der Antriebseinheit die Winkelgeschwindigkeiten des ersten und des zweiten Getriebegliedes eine entgegengesetzte Orientierung auf.

In dieser Ausführungsform ist vorzugsweise ein Abstand von dem zweiten Zahnsegment zur zweiten Drehachse des zweiten Getriebegliedes größer als ein Abstand vom ersten Zahnsegmentes des ersten Getriebegliedes zur ersten Drehachse des ersten Getriebegliedes, wobei eine Untersetzung von dem ersten Getriebeglied zum zweiten Getriebeglied realisiert ist.

Eine vorteilhafte Ausbildung der Erfindung sieht vor, dass das Zahnsegment des zweiten Getriebegliedes an einem inneren Radius des zweiten Getriebegliedes ausgebildet ist und das erste Zahnsegment des ersten Getriebegliedes übergreift. Bei dieser Anordnung weisen bei einer Bewegung der Antriebseinheit die Winkelgeschwindigkeiten des ersten und des zweiten Getriebegliedes eine gleichgerichtete Orientierung auf.

In einer Weiterbildung ist der erste Anschlag der Antriebseinheit elastisch verformbar. Da ein Stoppen der Antriebseinheit bevorzugt mittels einem Erfassen einer Änderung der Stromaufnahme des Elektromotors erfolgt, wirken von dem Moment bei Erreichen der ersten Anschlagposition bis zum Stoppen der Antriebseinheit sehr hohe Kräfte auf die Getriebeglieder. Ein elastisch verformbarer erster Anschlag kann die hohen Kräfte dämpfen und kann insbesondere ein Überspringen der Zahnsegmente verhindern. Die Getriebeglieder sind vorzugsweise aus Kunststoff gefertigt. Der oder die Anschläge umfassen zumindest an einer dem Getriebeglied zugewandten Seite einen elastischen Kunststoff.

In einer weiteren Ausgestaltung weist die Antriebseinheit einen zweiten Anschlag und eine zweite Anschlagposition auf. Dabei bewirkt die Antriebseinheit bevorzugt in der ersten Anschlagposition ein Verriegeln des Türschlosses und in der zweiten Anschlagposition ein Entriegeln des Türschlosses. In dieser Ausführungsform hat das erste Getriebeglied bevorzugt ein zweites Verriegelungselement, welches mit einem zweiten Aufnahmeelement der Antriebseinheit in der zweiten Anschlagposition zusammenwirkt und eine Verriegelung bewirkt. Zwischen der ersten und der zweiten Anschlagposition ist das erste und das zweite Verriegelungselement unabhängig von der Stützfläche. Insbesondere ist das zweite Aufnahmeelement an dem zweiten Getriebeglied angeordnet. In einer vorteilhaften Weiterbildung können auch mehrere Verriegelungselemente und korrespondierende Aufnahmeelemente vorgesehen sein, wobei auch eine Achsabstandsicherung unabhängig von einem Erreichen einer Anschlagposition bewirkt werden kann.

Weitere Vorteile, Merkmale und Einzelheiten der Erfindung ergeben sich aus der nachfolgenden Beschreibung eines bevorzugten Ausführungsbeispiels sowie anhand der Figuren.

Diese zeigen in:
- Fig. 1: eine Antriebseinheit mit einem ersten Getriebeglied und einem zweiten Getriebeglied in einer ersten Anschlagposition;
- Fig. 2: dieselbe Antriebseinheit in einer zweiten Anschlagposition;
- Fig. 3: eine Antriebseinheit, bei welcher ein Zahnsegment eines ersten Getriebegliedes ein Zahnsegment eines zweiten Getriebegliedes übergreift.

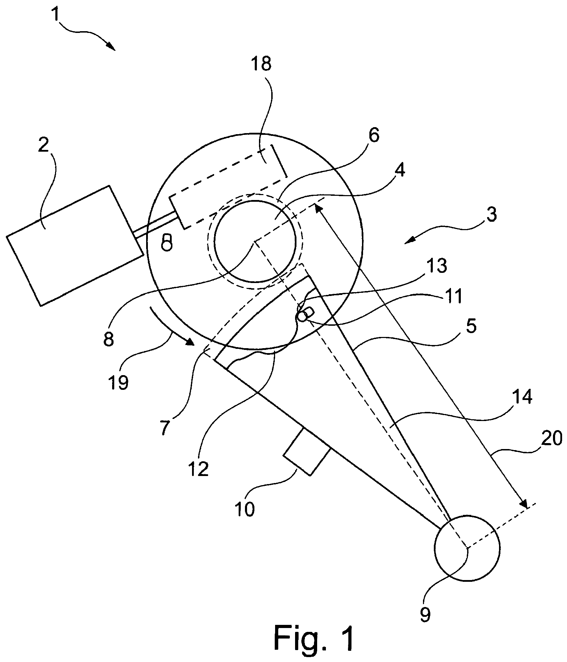

Fig. 1 zeigt eine Antriebseinheit 1 für ein Kraftfahrzeugschloss mit einem Motor 2, einer Getriebeeinheit 3, welche ein erstes Getriebeglied 4 und ein zweites Getriebeglied 5 mit jeweils einem ersten Zahnsegment 6 und einem zweiten Zahnsegment 7 und einer ersten Drehachse 8 und einer zweiten Drehachse 9 und einen ersten Anschlag 10 aufweist. Die Antriebseinheit 1 hat eine erste Anschlagposition, welche erreicht wird, wenn das zweite Getriebeglied 5 den ersten Anschlag 10 berührt. Der erste Anschlag 10 ist elastisch verformbar. Das erste Getriebeglied 4 hat ein erstes Verriegelungselement 11. Weiterhin weist das zweite Getriebeglied 5 ein Aufnahmeelement 12 auf und kann einstückig mit dem Getriebeglied 5 ausgebildet sein.

In der ersten Anschlagposition ist das erste Verriegelungselement 11 mittels des Aufnahmeelementes 12 verriegelt und sichert den Abstand 20 der ersten Drehachse 8 zur zweiten Drehachse 9 derart, dass ein Vergrößern dieses Abstandes durch das Verriegelungselement 11 verhindert ist. In dem in Fig. 1 gezeigten Ausführungsbeispiel liegt in der ersten Anschlagposition ein Berührpunkt des Verriegelungselementes 11 mit einer Stützfläche 13 auf einer Verbindungslinie 14 der ersten Drehachse 8 und der zweiten Drehachse 9, wobei das erste Getriebeglied 4 und das zweite Getriebeglied 5 radial gegeneinander fixiert sind.

In dieser ersten Anschlagposition kann mittels des ersten Getriebegliedes 5 eine Schließstellung des Kraftfahrzeugschlosses gesteuert werden. So ist es beispielsweise vorstellbar, dass mittels des Getriebegliedes 5 eine Verriegelung steuerbar ist. In der in der Figur 1 dargestellten Position des Getriebeglieds 5 kann dann zum Beispiel die Schließstellung verriegelt bzw. eingelegt sein. Mittels einer Drehung des Motors 2, welcher vorzugsweise als Elektromotor ausgeführt ist, wird eine Schnecke 18 angetrieben, welche mit dem ersten Zahnsegment 6 im Eingriff steht. Durch die Drehung der Schnecke 18 wird das erste Getriebeglied 4 aus der ersten Anschlagposition heraus in eine Richtung 19 hin zu einer zweiten Anschlagposition bewegt. Das erste Zahnsegment 6 und das erste Getriebeglied 4 sind bevorzugt als ein Bauteil ausgestaltet.

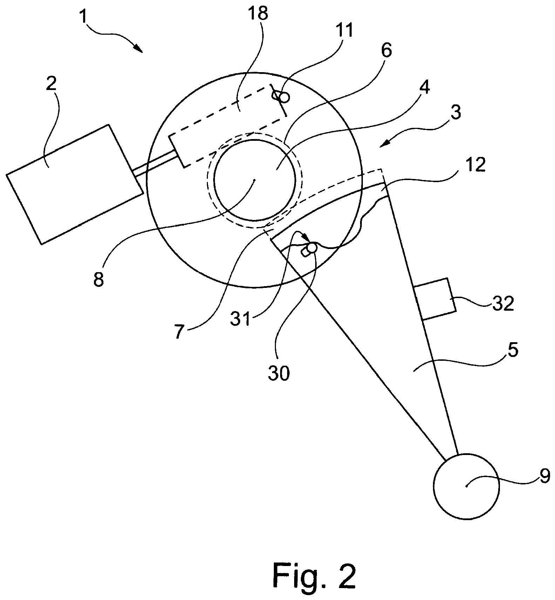

Fig. 2 zeigt dieselbe Ausgestaltung der beanspruchten Antriebseinheit aus Fig. 1 in einer zweiten Anschlagposition. Dabei berührt das zweite Getriebeelement 5, welches als Hebel ausgebildet ist, einen zweiten Anschlag 32 der Getriebeeinheit 3, welcher elastisch verformbar ist. Der Abstand der ersten Drehachse 8 zur zweiten Drehachse 9 ist mittels eines zweiten Verriegelungselementes 30, welches an dem ersten Getriebeglied 4 angeordnet ist, gesichert. Dabei berührt das zweite Verriegelungselement 30 insbesondere eine zweite Stützfläche 31 des Aufnahmeelementes 12. Das Aufnahmeelement weist in dieser Ausführungsform eine wellige Kontur auf. Mittels der welligen Kontur ist vorgesehen, dass das erste Verriegelungselement 11 und das zweite Verriegelungselement 30 aus jeweils der ersten bzw. der zweiten Anschlagposition heraus aus dem Aufnahmeelement 12 bewegbar sind und ein leichtes und genaues Einfahren der Verriegelungselemente 11, 30 in die Stützflächen 13, 31 ermöglicht wird.

In der zweiten Anschlagposition kann eine weitere Schließstellung für das Seitentürschloss des Kraftfahrzeugs eingelegt sein, wie beispielsweise entriegelt. Das Getriebeelement 5 dient dann beispielhaft als Verriegelungselement einer Zentralverriegelung. Über die Sicherung des Abstandes zwischen der ersten Drehachse 8 und der zweiten Drehachse 9 kann das zweite Getriebeelement 5 insbesondere aus der ersten Anschlagposition heraus in Richtung zur zweiten Anschlagposition angetrieben werden.

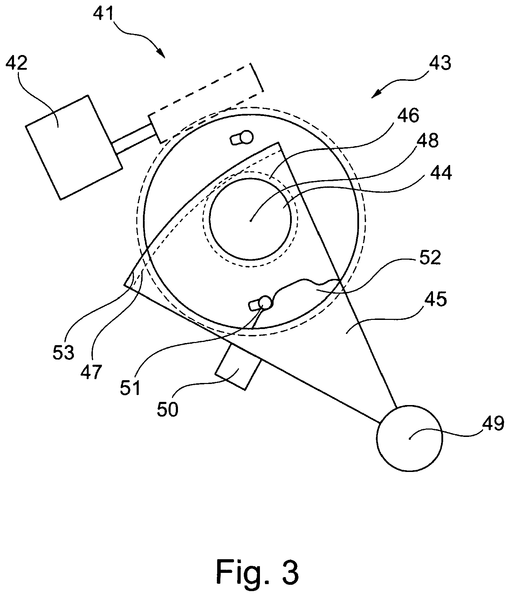

Fig. 3 zeigt eine weitere Ausführungsform einer Antriebseinheit 41 für ein Kraftfahrzeugschloss mit einem Motor 42, einer Getriebeeinheit 43, welche ein erstes Getriebeglied 44 und ein zweites Getriebeglied 45 mit jeweils einem ersten Zahnsegment 46 und einem zweiten Zahnsegment 47 und einer ersten Drehachse 48 und einer zweiten Drehachse 49 und einen ersten Anschlag 50 aufweist.

Das erste Getriebeglied 44 hat ein erstes Verriegelungselement 51. Weiterhin weist das zweite Getriebeglied 45 ein Aufnahmeelement 52 auf und ist als Hebel ausgebildet.

Bei der in Fig. 3 gezeigten Ausführungsform ist das Zahnsegment 47 des zweiten Getriebegliedes 45 an einem inneren Radius 53 des zweiten Getriebegliedes 45 ausgebildet und übergreift das erste Zahnsegment 46 des ersten Getriebegliedes 44.

Fig. 3 zeigt die Antriebseinheit 41 in einer ersten Anschlagposition, wobei in der ersten Anschlagposition das erste Verriegelungselement 51 mittels des Aufnahmeelementes 52 verriegelt ist und den Abstand der ersten Drehachse 48 zur zweiten Drehachse 49 derart sichert, dass ein Verkleinern dieses Abstandes durch das Verriegelungselement 51 verhindert ist.

## Patentansprüche

1. Antriebseinheit (1, 41) für kraftfahrzeug-technische Anwendungen, insbesondere Zentralverriegelungsantriebseinheit für einen Kraftfahrzeug-Türverschluss, mit einem Motor (2, 42), einer Getriebeeinheit (3, 43), welche zumindest ein erstes Getriebeglied (4, 44) und ein zweites Getriebeglied (5, 45) mit jeweils einem ersten Zahnsegment (6, 46) und einem zweiten Zahnsegment (7, 47), wobei sich das erste Getriebeglied (4, 44) und das zweite Getriebeglied (5, 45) mittels der Zahnsegmente (6, 7; 46, 47) miteinander in Eingriff befinden, und einer ersten Drehachse (8, 48) und einer zweiten Drehachse (9, 49) und einen ersten Anschlag (10, 50) aufweist, wobei die Antriebseinheit zumindest eine erste Anschlagposition aufweist, wobei
zumindest das erste Getriebeglied (4, 44) ein Verriegelungselement (11, 51) hat, welches in der ersten Anschlagposition mittels eines Aufnahmeelementes (12, 52) verriegelt ist und in der ersten Anschlagposition einen Abstand (20) der ersten Drehachse (8, 48) des ersten Getriebegliedes (4, 44) zum zweiten Getriebeglied (5, 45) sichert,
**dadurch gekennzeichnet, dass**
das Aufnahmeelement (12, 52) an dem zweiten Getriebeglied (5, 45) angeordnet ist und das Verriegelungselement (11, 51) in der ersten Anschlagposition mittels des Aufnahmeelements (12, 52) in radialer Richtung des ersten Getriebegliedes (4, 44) blockiert ist.

2. Antriebseinheit nach Anspruch 1,
**dadurch gekennzeichnet, dass**
das erste Getriebeglied (4, 44) ein Zahnrad ist.

3. Antriebseinheit nach einem der vorherigen Ansprüche,
**dadurch gekennzeichnet, dass**
das erste Getriebeglied (4, 44) durch eine Schnecke (18) angetrieben ist und das zweite Getriebeglied (5, 45) ein Zahnrad ist, wobei das zweite Getriebeglied (5, 45) mit einem Hebel zusammenwirkt.

4. Antriebseinheit nach einem der vorherigen Ansprüche,
**dadurch gekennzeichnet, dass**
das zweite Getriebeglied (5, 45) als Hebel und das zweite Zahnsegment (7, 47) des zweiten Getriebegliedes (5, 45) an einem äußeren Radius des zweiten Getriebegliedes (5, 45) ausgebildet ist.

5. Antriebseinheit nach einem der vorherigen Ansprüche,
**dadurch gekennzeichnet, dass**
das Zahnsegment (7, 47) des zweiten Getriebegliedes (5, 45) an einem inneren Radius (53) des zweiten Getriebegliedes (5, 45) ausgebildet ist und das erste Zahnsegment (6, 46) des ersten Getriebegliedes (4, 44) übergreift.

6. Antriebseinheit nach einem der vorherigen Ansprüche,
**dadurch gekennzeichnet, dass**
der erste Anschlag (10, 50) elastisch verformbar ist.

7. Antriebseinheit nach einem der vorherigen Ansprüche,
**dadurch gekennzeichnet, dass**
die Antriebseinheit einen zweiten Anschlag (32) und eine zweite Anschlagposition aufweist.

## Claims

1. Drive unit (1, 41) for automotive applications, in particular a central locking drive unit for a motor vehicle door latch, with a motor (2, 42), of a gearbox unit (3, 43), which has at least a first gear element (4, 44) and a second gear element (5, 45) respectively with a first toothed segment (6, 46) and a second toothed segment (7, 47), whereby the first gear element (4, 44) and the second gear element (5, 45) are engaged by means of the toothed segment (6, 7, 46, 47), and a first pivot axis (8, 48) and a second pivot axis (9, 49) and a first stop (10, 50), whereby the drive unit has at least a first stop position, whereby at least the first gear element (4, 44) has a bolting element (11, 51) which is bolted in the first stop position by means of an accommodation element (12, 52) and in the first stop position ensures a distance (20) of the first pivot axis (8, 48) of the first gear element (4, 44) to the second gear element (5, 45), **characterized in that** the accommodation element (12, 52) is arranged on the second gear element (5, 45) and the bolting element (11, 51) is blocked in the first stop position by means of the accommodation element (12, 52) in the radial direction of the first gear element (4, 44).

2. Drive unit according to claim 1, **characterized in that** the first gear element (4, 44) is a gearwheel.

3. Drive unit according to one of the previous claims, **characterized in that** the first gear element (4, 44) is driven by a screw (18) and the second gear element (5, 45) is a gearwheel, whereby the second gear element (5, 45) interacts with a lever.

4. Drive unit according to one of the previous claims, **characterized in that** the second gear element (5, 45) is formed as a lever (7) and the second toothed segment (47) of the second gear element (5, 45) is formed on an external radius of the second gear element (5, 45).

5. Drive unit according to one of the previous claims, **characterized in that** the toothed segment (7, 47) of the second gear element (5, 45) is formed on an internal radius (53) of the second gear element (5, 45) and the first toothed segment (6, 46) of the first gear element (4, 44) overlaps.

6. Drive unit according to one of the previous claims, **characterized in that** the first stop (10, 50) is elastically malleable.

7. Drive unit according to one of the previous claims, **characterized in that** the drive unit has a second stop (32) and a second stop position.

## Revendications

1. Unité d'entraînement (1, 41) pour applications automobiles techniques, notamment unité d'entraînement pour verrouillage centralisé destiné à une serrure de prote de voiture, dotée d'un moteur (2, 42), d'une unité de transmission (3, 43), dotée d'au moins un premier élément de transmission (4, 44) et d'un deuxième élément de transmission (5, 45), doté chacun d'un premier segment denté (6, 46) et d'un deuxième segment denté (7, 47), à savoir que le premier élément (4, 44) et le deuxième élément de transmission (5, 45) s'attrapent mutuellement à l'aide des segments dentés (6, 7, 46, 47), et qu'un premier axe de rotation (8, 48) et un deuxième axe de rotation (9, 49) une première butée (10, 50), à savoir que l'unité d'entraînement présente au moins une première position d'arrêt, à savoir qu'au moins le premier élément de transmission (4, 44) est doté d'un élément de verrouillage (11, 51) qui est, dans la première position d'arrêt, verrouillé à l'aide d'un élément de support (12, 52) et, dans la première position d'arrêt, assure un écart (20) du premier axe de rotation (8, 48) du premier élément de transmission (4, 44) par rapport au deuxième élément de transmission (5, 45), **caractérisé en ce que** l'élément de support (12, 52) est placé sur le deuxième élément de transmission (5, 45), et que l'élément de verrouillage (11, 51) est bloqué dans la première position d'arrêt à l'aide de l'élément de support (12, 52), dans la direction radiale du premier élément de transmission (4, 44).

2. Unité d'entraînement selon la revendication 1 **caractérisée en ce que** le premier élément de transmission (4, 44) est une roue dentée.

3. Unité d'entraînement selon une des revendications précédentes, **caractérisé en ce que** le premier élément de transmission (4, 44) est entraîné par une fis sans fin (18) et que le deuxième élément de transmission (5, 45) est une roue dentée, à savoir que le deuxième élément de transmission (5, 45) interagit avec un levier.

4. Unité d'entraînement selon une des revendications précédentes, **caractérisé en ce que** le deuxième élément de transmission (5, 45) a la forme d'un levier et que le deuxième segment denté (7, 47) du deuxième élément de transmission (5, 45) est formé sur un rayon extérieur du deuxième élément de transmission (5, 45).

5. Unité d'entraînement selon une des revendications précédentes, **caractérisé en ce que** le segment denté (7, 47) du deuxième élément de transmission (5, 45) est formé sur un rayon intérieur (53) du deuxième élément de transmission (5, 45) et chevauche le premier segment denté (6, 46) du premier élément de transmission (4, 44).

6. Unité d'entraînement selon une des revendications précédentes, **caractérisé en ce que** la première butée (10, 50) est déformable élastiquement.

7. Unité d'entraînement selon une des revendications précédentes, **caractérisé en ce que** l'unité d'entraînement présente une deuxième butée (32) et une deuxième position de butée.
